# EUROPEAN PATENT SPECIFICATION

(11) **EP 2 425 053 B1**
(45) Date of publication and mention of the grant of the patent: **02.04.2014**
(21) Application number: 10769378.0
(22) Date of filing: 29.04.2010
(51) Int. Cl.: D21G 5/00, E04G 1/15, F16P 1/00, D21F 7/00, E04F 11/18

(54) **SERVICE PLATFORM ARRANGEMENT FOR A FIBER WEB MACHINE**
BEDIENBÜHNENANORDNUNG FÜR EINE FASERVLIESMASCHINE
AGENCEMENT DE PLATEFORME DE SERVICE POUR MACHINE A BANDE FIBREUSE

(30) Priority: 30.04.2009 FI 20095486
(43) Date of publication of application: 07.03.2012
(73) Proprietor: Metso Paper, Inc., 00130 Helsinki (FI)
(72) Inventor: AALTIO, Lauri, 02320 Espoo (FI); BULLER, Jyrki, 00180 Helsinki (FI); VÄÄTÄNEN, Risto, 04430 Järvenpää (FI)
(74) Representative: TBK
(86) International application number: PCT/FI2010/050346
(87) International publication number: WO 2010/125244

(56) References cited:
- WO-A1-2007/080215
- WO-A1-2007/080215
- WO-A1-2010/046533
- US-A- 4 067 548
- US-A- 4 067 548

## Description

The present invention relates to a service platform arrangement for a fiber web machine according to the preamble of patent claim 1.

Many machines and process equipment used for example in industry are large and still access to the vicinity of their components must be arranged for service and operation. Typically this has been taken care of by providing the machine with service platforms placed in appropriate locations. The service platforms must be carried out so that it is safe to move on them and to run and service the machine. Thus the platforms are equipped with railings.

In fiber web machines, there are various partial processes associated with the web formation and the treatment of the web and the components of the fiber web machine performing such processes have been placed optimally in relation to each other in view of the progress of the process. The components of the fiber web machine include also additional apparatus such as fabric reconditioning equipment and measuring equipment etc. It is essential for the operation and service of the fiber web machine that access to the various components has been provided. Further, a fiber web machine comprises service platforms. However, the platforms have often been designed and build separately for each partial process and thus moving between the partial processes may be cumbersome for the personnel.

The prior art service platforms of fiber web machines are typically walkways provided in support of brackets in the body of the fiber web machine. This kind of an arrangement is often slow to set up due to among other thing the large number of separate components.

It is known as such to use glass in railings. Publications US4054268, US4841697 and US6964410 disclose various railing solutions using glass as the railing material. These disclose fixing the glass at its edge with compression joints of different kind to an elongated securing member with which the railing is secured to the support structure. Publication WO 2007/144460 A1 discloses a casing of a fiber web machine, utilizing thermal glass elements. Publication WO 2007/080215 A1 discloses a service platform arrangement as in the preamble of claim 1.

The railings of the service platforms of fiber web machines are typically of tube construction with tube poles at certain spaces to support the essentially horizontal hand rail. The rail may be also in a slightly inclined position for example in connection with stairs. This kind of a tubular construction is fixed to the service platform in a known way so that there is a hole and/or a sleeve at the railing pole in the service platform into which the railing pole is guided and secured with for example through bolts.

Although the structure as such is sturdy and reliable in operation, the building of such a service platform is to some extent inefficient. Further, the structure presupposes great accuracy in the positioning of the sleeves provided in the service platforms for the railing to correspond exactly to the pole division in the railing.

An object of the invention is to provide a service platform arrangement for a fiber web machine which among other things permits more efficient moving between the various components of the fiber web machine and which facilitates the daily work of the personnel main railing pole.

The object of the invention is solved in the way described in patent claim 1.

The additional other characteristic features of the invention are disclosed in the appended patent claims and the following description of the embodiments of the drawings.

A service platform arrangement of a fiber web machine according to the invention comprises at least a railing and a walkway provided in connection with each other. The railing of the service platform arrangement is a supporting structure and the walkway of the service platform arrangement is supported to the railing. The railing includes a support girder at its first side and a hand rail at the other side, i.e. the opposite side in respect of the first side, and at least one intermediate member connecting the support girder and the hand rail and being secured to them.

The railing preferably comprises at its first side a support girder provided with a securing element by means of which the railing is secured both to the walkway and the fiber web machine. The securing element comprises a recess parallel with the support girder, the opening width of the recess being smaller than the maximum width to the recess. The cross section of the recess is preferably unchanged along its entire length. The securing element permits easy change of the securing point.

According to an embodiment the railing is formed essentially of said support girder, the hand rail and at least one intermediate member.

The walkway has been fixed to said securing element and the service platform arrangement is supported onto the fiber web machine via said securing element.

The service platform arrangement has been provided to extend to the area of at least two different machine sections essentially at the same horizontal level.

A service platform arrangement according to a preferred embodiment includes service platform arrangements located at least at two different horizontal levels, both disposed to extend along at least two different machine sections.

Preferably the railings of said at least two service platforms at different horizontal levels have been disposed essentially at the same vertical plane.

The invention and its operation are explained below with reference to the accompanying schematic drawings, in which
Figure 1 illustrates schematically an embodiment of a fiber web machine according to the invention;
Figure 2 illustrated schematically the fiber web machine of Figure 1 in the direction II;
Figure 3 illustrates schematically a service platform arrangement of a fiber web machine according to an embodiment to the invention; and
Figure 4 illustrates a solution according to an embodiment of the invention,
Figure 5 illustrates a wall element of the set of walls of Figure 4.

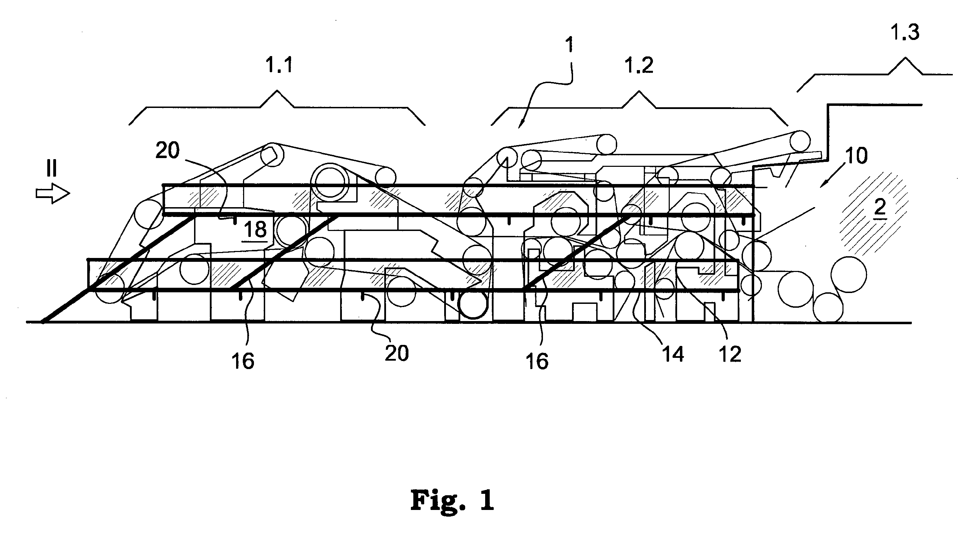

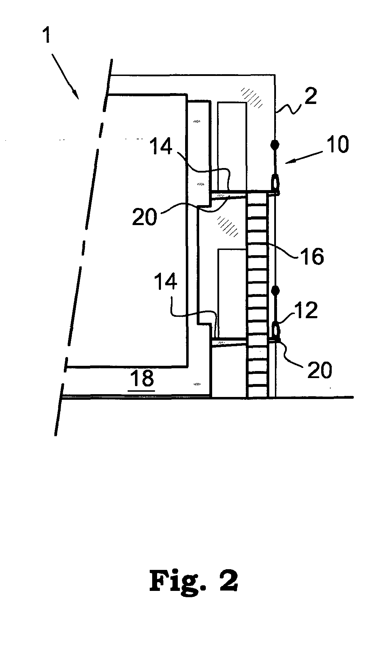

Figure 1 illustrates schematically an embodiment of a fiber web machine 1 according to the invention and a service platform arrangement 10 connected with it. Figure 2 illustrates schematically the fiber web machine of Figure 1 as seen in direction II. For the sake of clarity and by way of an example, only the so-called forming section 1.1 and the press section 1.2 have been illustrated here. The fiber web machine has been provided with a service platform arrangement 10 comprising at least a railing 12 and a walkway 14. The service platform arrangement has been disposed in connection with the fiber web machine to extend in the machine direction to the area of at least two different machine sections 1.1, 1.2 of the fiber web machine essentially at the same horizontal level. In this way the service platform arrangement continues essentially continuous and essentially at the same horizontal level between at least two different machine sections. Thus, when moving between machine sections the use of stairs is minimized and thus operating the fiber web machine is facilitated and more efficient and safer than before. In the embodiment illustrated in Figure 1 the fiber web machine comprises two superimposed service platform arrangements 10 at different vertical levels. Access to the service platform arrangements and moving between the upper and the lower service platform arrangement is provided via stairs 16. Both the service platform arrangements extend essentially linear to the area of at least two machine sections. The service platform arrangements are essentially horizontal. In some applications a service platform arrangement with a very little rise (or decline) may also be used. Then the rise (or decline) is preferably at the most 1:8.

The railings of the superimposed service platform arrangements have preferably been arranged essentially at the same vertical plane, in other words substantially at one and the same transverse distance from the machine longitudinal center line, as shown in Figure 2. Preferably also the vertical wall 2 of the casing, i.e. the hood of the fiber web machine drying section 3 following the service platform arrangements in the machine direction, in other words the outer wall of the hood, is at this plane. Then the vertical wall of the hood and the railings of the service platform arrangements of the press and drying sections run via the same vertical plane and thus the side line of the fiber web machine is essentially straight. This kind of an arrangement facilitates and makes more efficient the use of the machine hall of the fiber web machine.

In the service platform arrangement the railing 12 is preferably a so-called supporting structure whereby the supporting of the service platform arrangement is carried out mainly by means of the railing. The walkway 14 of the service platform arrangement is supported to the railing. The service platform arrangement 10 is supported on the body or other structure 18 of the fiber web machine by means of brackets 20 transverse to fiber web machine, the brackets being secured at one of their ends to the body or other structure of the fiber web machine and at their other end to the railing 12. The railing comprises at its first side 122 a support girder 128 and at its other side 124 a handrail 1210. The first side means the bottom edge of the railing when the service platform has been assembled in its place, and the other side the top edge of the railing and thus they are the opposite sides of the railing.

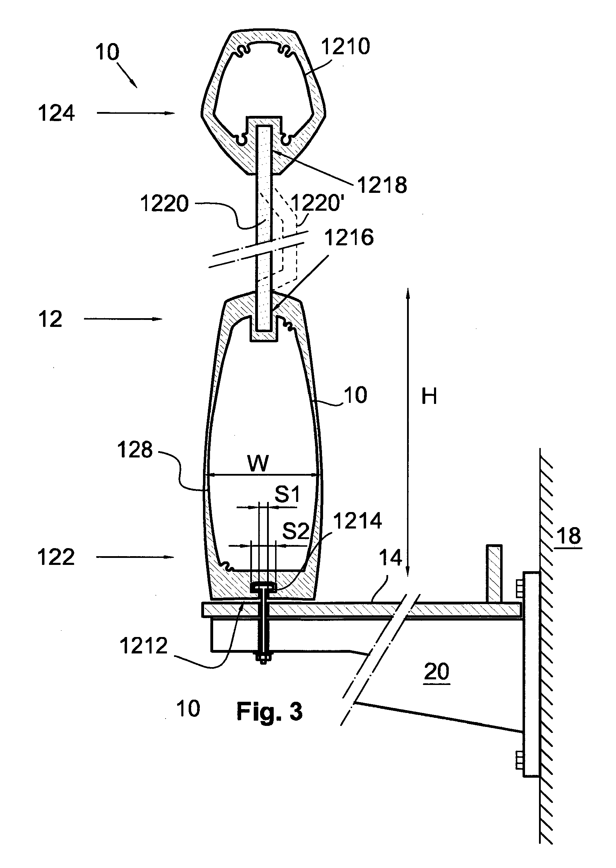

The support girder extends in the longitudinal direction of the railing 12 along the entire length of the railing but it may be composed of more than one parts connected to each other. Figure 3 illustrates more closely an embodiment of a service platform arrangement 10 of a fiber web machine according to the invention. Preferably the support girder is essentially longer in the vertical direction H of the railing (when assembled for use) than in the direction W transverse to the vertical direction.

Both the support girder 128 and the handrail 1210 are preferably so-called profile bars with a hollow inside and manufactured by extrusion of light metal. The support girder has been provided at its first side 1212 with a securing element comprising a recess 1214 in the direction of the support girder, the opening width S1 of the recess being smaller than its maximum width S2. Here the width means the average width. By means of the recess, both the walkway 14 and the brackets 20 may be secured to the support girder with a tube connection. The recess, which may also be called a groove, in the direction of the support girder can accept the nut or the corresponding element used in the securing. The collars of the recess in turn detain the nut or the corresponding element. The walkway may be secured to the support girder with a relatively dense spacing whereby also a bracket 20 is secured to the support girder only in connection with certain tube connections. The bracket 20 has been secured at its other end to the body 18.

There is a groove 1-216 provided in the support girder at the side opposite to the first side 1212 and extending along the entire length of the support girder. In the same way the hand rail includes a groove 1218. The railing further comprises an intermediate member 1220 secured in the groove of the support girder and the groove of the hand rail. The intermediate member is in the embodiment of Figure 3 a transparent panel such as a glass panel preferably secured with adhesive to said grooves. The panel extends preferably along to whole length of the railing as a solid piece. This kind of a railing, in addition to being self-supporting, also serves as an efficient noise, moisture and heat barrier from the fiber web machine to the machine hall.

.The intermediate member may be implemented also in other ways 1120'. The plate-like structure may be manufactured also of other materials such as aluminum or other light metals. The structure may also be layered whereby its noise and heat isolation capacity improve as well as its stiffness. According to an embodiment the intermediate member may also be composed of a number of separate elements which may also be called railing poles. Further, the structure may be different from a plane and it may be a formed structure comprising projections extending from the surface. The structure may also be plane-like and comprise combinations of different materials such as various combinations of glass and aluminum panels. In any case, the structure is secured to the hand rail and the support girder via a groove in the longitudinal direction of the railing.

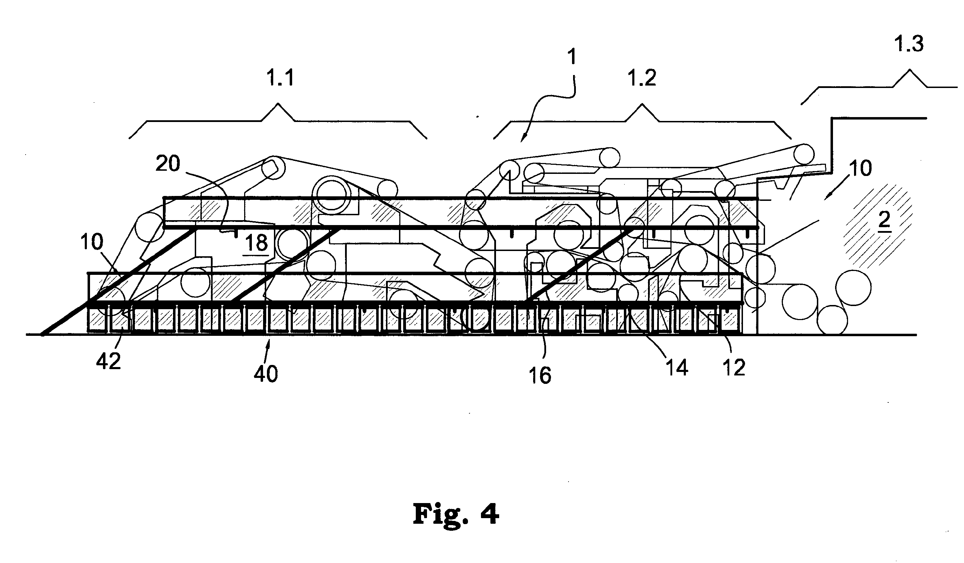

Figure 4 illustrates a solution according to an embodiment of the invention where the fiber web machine is partly separated openably by means of the service platform arrangement from the adjacent walking area of the fiber web machine. This kind of a walking area is typically for example the so-called machine level of the tending side of a fiber web machine. The machine level of a fiber web machine is an area, the most important work area used for servicing and monitoring the machine and the process. In Figure 4 the next service platform arrangement 10 upwards from the machine level in the vertical direction has been provided with a set of walls 40 between the machine level and the service platform arrangement. The set of walls 40 has been disposed in connection with the support girder of the service platform arrangement. The set of walls 40 has been provided to essentially cover direct connection from the fiber web machine to the working zone of the machine level in the vicinity of the fiber web machine. The set of walls is composed of several individual walls 42, which have been secured preferably in a movable manner to the first service platform arrangement above the machine level.

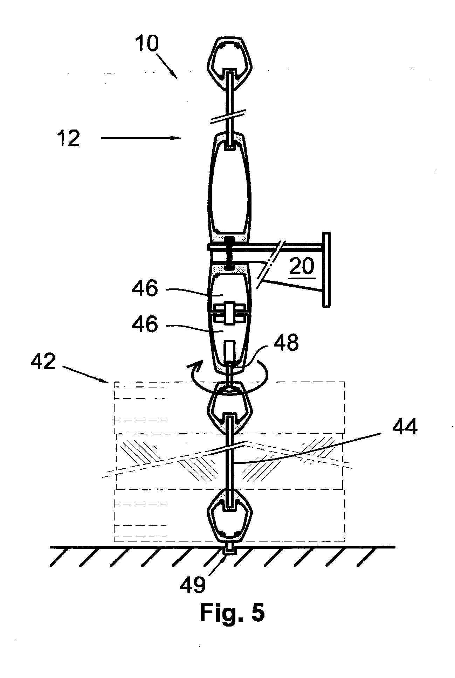

Figure 5 illustrates schematically an individual wall 42 of the set of walls of figure 4 and a securing arrangement of the set of walls. The wall preferably comprises a transparent panel structure 44 such as a glass panel which constitutes most of the area of the wall. The wall is preferably suspended via a suspension means 48 from a guide 46 provided in the service platform arrangement. The securing arrangement of the set of walls allows moving each wall in the guide 46 and further the suspension means comprises means for turning the wall around a vertical turning axis. In this way the area covered with the walls can be varied by moving the walls in relation to each other in the direction of the fiber web machine and at the same time turning each wall so that they overlap each other. In an extreme situation the walls may be turned even to a fully transverse position and packed one after the other; then the access to the fiber web machine is as open as possible.

There is a control element 49 such as a guide or a corresponding member provided between the machine level and the walls 42 to support of the lower part of the walls in a controlled way. This kind of an arrangement stops locally the noise, possible splashes, heat etc. of the fiber web machine from advancing to the machine level whereby the effect is directed exactly to the area where for example the operating personnel moves most. When the wall is transparent the monitoring possibilities of the operation of the machine is maintained particularly good.

According to another embodiment the walls may be provided to be individually support for example on the machine level. Then the walls may be placed locally for example between a component creating noise and the walking route of the monitoring and service personnel whereby the personnel is less exposed. The essentially transparent noise control elements, i.e. the walls, improve the noise control of the fiber web machine without essentially increasing the surfaces impairing the visibility or making the service/monitoring more cumbersome.

It must be noted that only a few most preferred embodiments of the invention have been presented above. Depending on the matrix used the details of the manufacture of the composite structure may vary. Thus, it is clear that the invention is not limited to the embodiments presented above but it may be modified in many ways within the scope defined by the appended patent claims.

## Claims

1. A service platform arrangement (10) of a fiber web machine, including at least a railing (12) and a walkway (14) provided in connection with each other,
wherein in the service platform arrangement the railing (12) is a supporting structure,
wherein the walkway (14) of the service platform arrangement is supported to the railing (12), and
wherein the railing (12) includes a hand rail (1210),
**characterized in that**
the railing (12) includes at its first side a support girder (128) and at the other side, opposite to the first side, said hand rail (1210) and at least one intermediate member (1220), connecting the hand rail (1210) and the support girder (128), and secured to them.

2. A service platform arrangement of a fiber web machine, according to claim 1, **characterized in that** the railing (12) includes at its first side (122) said support girder (128) provided with a securing element including a recess (1214) in the longitudinal direction of the support girder (128) the opening width of which is smaller than the maximum width of the recess.

3. A service platform arrangement of a fiber web machine, according to claim 1, **characterized in that** the railing (12) is essentially formed of said support girder (128), said hand rail (1210) and said at least one intermediate member (1220).

4. A service platform arrangement of a fiber web machine, according to claim 2, **characterized in that** the walkway (14) has been fixed to said securing element.

5. A service platform arrangement of a fiber web machine, according to claim 2, **characterized in that** the service platform arrangement has been supported to the fiber web machine by means of said securing element.

6. A service platform arrangement of a fiber web machine, according to claim 2, **characterized in that** the cross section of the recess (1214) in the securing element is unchanged along its entire length.

7. A service platform arrangement of a fiber web machine, according to claim 1, **characterized in that** the service platform arrangement has been provided to extend to at least two different machine sections essentially at the same horizontal level.

## Patentansprüche

1. Bedienplattformanordnung (10) einer Faserbahnmaschine mit zumindest einem Geländer (12) und einem Laufsteg (14), die in Verbindung miteinander vorgesehen sind,
wobei in der Bedienplattformanordnung das Geländer (12) eine Stützstruktur ist,
wobei der Laufsteg (14) der Bedienplattformanordnung an dem Geländer (12) gestützt ist, und
wobei das Geländer (12) einen Handlauf (1210) aufweist,
**dadurch gekennzeichnet, dass**
das Geländer (12) an seiner ersten Seite einen Stützträger (128) und an der anderen Seite, die zu der ersten Seite entgegengesetzt ist, den Handlauf (1210) und zumindest ein Zwischenelement (1220) aufweist, das den Handlauf (1210) und den Stützträger (128) verbindet und an ihnen gesichert ist.

2. Bedienplattformanordnung einer Faserbahnmaschine gemäß Anspruch 1, **dadurch gekennzeichnet, dass** das Geländer (12) an seiner ersten Seite (122) den Stützträger (128) aufweist, der mit einem Sicherungselement versehen ist, das eine Vertiefung (1214) in der Längsrichtung des Stützträgers (128) hat, wobei die Öffnungsbreite von dieser kleiner ist als die maximale Breite der Vertiefung.

3. Bedienplattformanordnung einer Faserbahnmaschine gemäß Anspruch 1, **dadurch gekennzeichnet, dass** das Geländer (12) im Wesentlichen aus dem Stützträger (128), dem Handlauf (1210) und dem zumindest einen Zwischenelement (1220) ausgebildet ist.

4. Bedienplattformanordnung einer Faserbahnmaschine gemäß Anspruch 2, **dadurch gekennzeichnet, dass** der Laufsteg (14) an dem Sicherungselement fixiert ist.

5. Bedienplattformanordnung einer Faserbahnmaschine gemäß Anspruch 2, **dadurch gekennzeichnet, dass** die Bedienplattformanordnung an der Faserbahnmaschine mittels des Sicherungselementes gestützt ist.

6. Bedienplattformanordnung einer Faserbahnmaschine gemäß Anspruch 2, **dadurch gekennzeichnet, dass** der Querschnitt der Vertiefung (1214) in dem Sicherungselement entlang seiner gesamten Länge unverändert ist.

7. Bedienplattformanordnung einer Faserbahnmaschine gemäß Anspruch 1, **dadurch gekennzeichnet, dass** die Bedienplattformanordnung so vorgesehen ist, dass sie sich zu zumindest zwei verschiedenen Maschinenabschnitten im Wesentlichen bei der gleichen horizontalen Höhe erstreckt.

## Revendications

1. Agencement de plateforme de service (10) d'une machine à bande fibreuse, comportant au moins une rambarde (12) et une passerelle (14) prévues en liaison l'une avec l'autre,
dans lequel, dans l'agencement de plateforme de service, la rambarde (12) est une structure de support,
dans lequel la passerelle (14) de l'agencement de plateforme de service est supportée sur la rambarde (12), et
dans lequel la rambarde (12) comporte une main courante (1210),
**caractérisé en ce que**
la rambarde (12) comporte au niveau de son premier côté une poutre de support (128) et au niveau de l'autre côté, opposé au premier côté, ladite main courante (1210) et au moins un élément intermédiaire (1220), reliant la main courante (1210) et la poutre de support (128), et fixé à celles-ci.

2. Agencement de plateforme de service d'une machine à bande fibreuse, selon la revendication 1, **caractérisé en ce que** la rambarde (12) comporte au niveau de son premier côté (122) ladite poutre de support (128) pourvue d'un élément de fixation comportant un évidement (1214) dans la direction longitudinale de la poutre de support (128) dont la largeur d'ouverture est inférieure à la largeur maximale de l'évidement.

3. Agencement de plateforme de service d'une machine à bande fibreuse, selon la revendication 1, **caractérisé en ce que** la rambarde (12) est essentiellement formée de ladite poutre de support (128), de ladite main courante (1210) et dudit au moins un élément intermédiaire (1220).

4. Agencement de plateforme de service d'une machine à bande fibreuse, selon la revendication 2, **caractérisé en ce que** la passerelle (14) a été fixée audit élément de fixation.

5. Agencement de plateforme de service d'une machine à bande fibreuse, selon la revendication 2, **caractérisé en ce que** l'agencement de plateforme de service a été supporté sur la machine à bande fibreuse au moyen dudit élément de fixation.

6. Agencement de plateforme de service d'une machine à bande fibreuse, selon la revendication 2, **caractérisé en ce que** la section transversale de l'évidement (1214) dans l'élément de fixation reste inchangée le long de toute sa longueur.

7. Agencement de plateforme de service d'une machine à bande fibreuse, selon la revendication 1, **caractérisé en ce que** l'agencement de plateforme de service a été agencé de façon à s'étendre sur au moins deux sections de machine différentes essentiellement au même niveau horizontal.
